# EUROPÄISCHE PATENTANMELDUNG

(11) **EP 4 600 084 A1**
(43) Veröffentlichungstag der Anmeldung: **13.08.2025**
(21) Anmeldenummer: 25154704.8
(22) Anmeldetag: 29.01.2025
(51) Int. Cl.: B60N 2/30, B60N 2/68, B60N 2/02

(54) **GURTGESTELL FÜR EINEN FAHRZEUGSITZ**

(30) Priorität: 07.02.2024 DE 102024103387
(71) Anmelder: Aguti Produktentwicklung & Design GmbH, 88085 Langenargen (DE)
(72) Erfinder: Rogg, Christian, 88142 Wasserburg (DE); Pöhler, Felix, 88709 Meersburg (DE)
(74) Vertreter: RavensPAT Patentanwälte Partnerschaft mbB

(57) **Zusammenfassung**

Gurtgestell für einen Fahrzeugsitz eines Fahrzeugs, wobei das Gurtgestell eine Sitzeinheit, eine Vertikalstütze und eine an der Vertikalstütze angeordnete Querstrebe aufweist, wobei die Sitzeinheit dazu ausgebildet ist, um ein Sitzkissen des Fahrzeugsitz anzuordnen, wobei die Sitzeinheit ein erstes Sitzelement und ein zweites Sitzelement aufweist, wobei die Sitzeinheit einen Bewegungsmechanismus aufweist, sodass das zweite Sitzelement aus einer ersten Position relativ zum ersten Sitzelement in eine zweite Position relativ zum ersten Sitzelement bewegbar ist, wobei der Bewegungsmechanismus derart ausgebildet ist, dass das zweite Sitzelement durch eine erste lineare Bewegung weg vom ersten Sitzelement, einer anschließenden Drehbewegung relativ zum ersten Sitzelement und einer daran anschließenden zweiten linearen Bewegung hin zum ersten Sitzelement von der ersten in die zweite Position oder umgekehrt bewegbar ist.

## Beschreibung

### Stand der Technik

Gurtgestelle für Fahrzeugsitze sind allgemein bekannt.

Insbesondere sind Gurtgestelle für Fahrzeugsitze bekannt, welche umbaubar vorhanden sind. Beispielsweise sind die Gurtgestelle derart umbaubar vorhanden, dass in einer Position der Gurtgestelle ein Sitz, z.B. ein Sofasitz, realisiert ist und in einer weiteren Position in Fahrzeugsitz, welcher die rechtlichen Sicherheitsnormen erfüllt. Bei diesen bekannten Gurtgestellen ist meist die Sitzrichtung in der Sofakonfiguration quer zu einer Fahrtrichtung des Fahrzeugs, in welches das Gurtgestell eingebaut ist, vorhanden und in der Fahrzeugsitzkonfiguration ist die Sitzrichtung in Fahrtrichtung ausgerichtet.

Häufig nachteilig an den bekannten Gurtgestellen ist, dass zur Ausbildung des Fahrzeugsitz und/oder zur Ausbildung als Sofasitz Sitzkissen bewegt werden müssen. Hierbei ergibt sich bei bekannten Gurtgestellen häufig die Frage, wohin die Sitzkissen verräumt werden können, da z.B. ein Sitzkissen beim Umbau von der Sofakonfiguration in die Fahrzeugsitzkonfiguration entfernt werden muss.

Auch ist bei diesen bekannten Gurtgestellen meist durch den Umbau nur ein einziger Fahrzeugsitz realisierbar. Häufig ist jedoch Bedarf für einen weiteren Fahrzeugsitz.

### Aufgabe und Vorteile der Erfindung

Der Erfindung liegt die Aufgabe zugrunde, ein verbessertes Gurtgestell oder einen verbesserten Fahrzeugsitz bereitzustellen, um einen zusätzlichen Fahrzeugsitz in einem Fahrzeug zu realisieren. Insbesondere eine verbessertes oder alternatives Gurtgestell zur Ausbildung eines Zusatzsitz in Form eines Fahrzeugsitz oder zur Ausbildung von zwei Fahrzeugsitzen bereitzustellen, welcher/welche die rechtlichen Sicherheitsanforderungen für eine Zulassung als Fahrzeugsitz erfüllt.

Die Aufgabe wird durch die Merkmale des Anspruchs 1 gelöst.

In den abhängigen Ansprüchen sind vorteilhafte und zweckmäßige Ausführungsformen der Erfindung angegeben.

Es wird ein Gurtgestell für einen Fahrzeugsitz eines Fahrzeugs vorgeschlagen, wobei das Gurtgestell eine Sitzeinheit, eine Vertikalstütze und eine an der Vertikalstütze angeordnete Querstrebe aufweist, wobei die Sitzeinheit dazu ausgebildet ist, um ein Sitzkissen des Fahrzeugsitz anzuordnen, wobei die Sitzeinheit ein erstes Sitzelement und ein zweites Sitzelement aufweist, wobei die Sitzeinheit einen Bewegungsmechanismus aufweist, sodass das zweite Sitzelement aus einer ersten Position relativ zum ersten Sitzelement in eine zweite Position relativ zum ersten Sitzelement bewegbar ist, wobei der Bewegungsmechanismus derart ausgebildet ist, dass das zweite Sitzelement durch eine erste lineare Bewegung weg vom ersten Sitzelement, einer anschließenden Drehbewegung relativ zum ersten Sitzelement und einer daran anschließenden zweiten linearen Bewegung hin zum ersten Sitzelement von der ersten in die zweite Position oder umgekehrt bewegbar ist. Hierdurch ist das Gurtgestell oder ein Fahrzeugsitz, welcher das Gurtgestell aufweist, von einer Sofakonfiguration in eine Fahrzeugsitzkonfiguration umbaubar. Beispielsweise ist hierdurch ein Fahrzeugsitz von einer Sofakonfiguration in einen Fahrzeugsitz, welcher zwei Sitzplätze aufweist, umbaubar, wobei beide Sitzplätze die Sicherheitsanforderung für eine Zulassung der Sitzplätze als Fahrzeugsitz erfüllen.

Beispielsweise ist das Gurtgestell dazu ausgebildet, dass in der ersten Position des zweiten Sitzelements mit dem Gurtgestell eine Sofakonfiguration des Fahrzeugsitzes ermöglicht ist, wobei in der zweiten Position des zweiten Sitzelements mit dem Gurtgestell ein Fahrzeugsitz mit zwei Fahrzeug-Sitzplätzen realisierbar ist.

Beispielsweise erfüllen die mit dem Gurtgestell ausbildbaren Fahrzeug-Sitzplätze den rechtlichen Sicherheitsnormen für Fahrzeugsitze in einem Fahrzeug, insbesondere den rechtlichen Sicherheitsnormen für Fahrzeugsitze in einem Wohnmobil. Die diesbezüglichen Sicherheitsnormen sind beispielsweise unter anderem durch die EU Verordnung (EU) 2019/2144 insbesondere in Verbindung mit den UN-Regelungen Nr. 14, Nr. 16 und Nr. 17 vorgegeben. Das Gurtgestell ist beispielsweise dazu ausgebildet, die für die Zulassung erforderlichen Sicherheitsnormen für Fahrzeugsitze im angeordneten Zustand am Fahrzeug zu erfüllen.

Denkbar ist, dass das zweite Sitzelement bei seiner Bewegung von der ersten Position in die zweite Position Zwischenpositionen einnimmt. Beispielsweise befindet sich das zweite Sitzelement nach dem linearen Wegbewegen aus der ersten Position in einer ersten Zwischenposition. Vorstellbar ist weiter, dass das zweite Sitzelement durch die Drehbewegung von der ersten Zwischenposition in eine zweite Zwischenposition bewegbar ist. Beispielsweise ist das zweite Sitzelement aus der zweiten Zwischenposition durch eine lineare Bewegung hin zum ersten Sitzelement in die zweite Position bewegbar. Vorstellbar ist auch, dass die Vorrichtung derart ausgebildet ist, dass das zweite Sitzelement ausschließlich in einer linearen Bewegung zum ersten Sitzelement hin oder weg und in einer Drehbewegung relativ zum ersten Sitzelement bewegbar ist.

Beispielsweise ist das Gurtgestell als ein Gurtgestell für einen Fahrzeugsitz und/oder eine Fahrzeugsitzbank ausgebildet.

Vorstellbar ist, dass die Vertikalstütze aufrecht stehend im Bereich eines Fahrzeugbodens eines Fahrzeugs mit dem Fahrzeug verbindbar ausgebildet ist. Beispielsweise erstreckt sich die Vertikalstütze entlang der Längsachse der Vertikalstütze über die Höhe des Gurtgestells. Denkbar ist, dass sich die Vertikalstütze entlang der Längsachse der Vertikalstütze über die gesamte Höhe des Gurtgestells erstreckt. Beispielsweise ist durch die Vertikalstütze eine Höhe des Gurtgestells vorgegeben. Vorstellbar ist auch, dass an einem unteren Endabschnitt der Vertikalstütze die Vertikalstütze im Bereich eines Fahrzeugbodens des Fahrzeugs mit dem Fahrzeug verbindbar ist. Beispielsweise ist die Vertikalstütze mit einem Fahrzeugrahmen und/oder dem Fahrzeugboden des Fahrzeugs verbindbar ausgebildet.

Vorstellbar ist auch, dass das Gurtgestell mit einer Fahrzeugseitenwand oder einer Fahrzeugsäule, welche sich im Bereich der Fahrzeugseitenwand befindet, verbindbar ausgebildet ist. Beispielsweise ist das Gurtgestell im angeordneten Zustand am Fahrzeug mit dem Fahrzeug verbunden. Z.B. ist das Gurtgestell im angeordneten Zustand am Fahrzeug mit dem Fahrzeugboden, mit dem Fahrzeugrahmen, mit der Fahrzeugseitenwand und/oder mit der Fahrzeugsäule verbunden.

Zum Beispiel sind Teile des Gurtgestells, z.B. die Vertikalstütze und/oder die Querstrebe, als ein längliches Profil ausgebildet. Z.B. ist die Vertikalstütze und/oder die Querstrebe als ein Hohl- oder Vollmaterial-Profil, beispielsweise als ein Vierkantrohr ausgebildet. Vorstellbar ist auch, dass eine Vertikalstütze aus zwei oder mehr Profilen gebildet ist. Beispielsweise sind die zwei oder mehr Profile der Vertikalstütze entlang der Längsachse der Vertikalstütze miteinander verbunden.

Zum Beispiel weist die Vertikalstütze vertikal oberhalb der Querstrebe, z.B. horizontal, geschlitzte Abschnitte auf. Hierdurch kann eine gewünschte plastische Verformung der Vertikalstütze vorgegeben werden, welche im Belastungsfall bei Überschreiten einer Grenz-Zugbelastung in Sitzrichtung stattfindet.

Der Begriff "Sitzrichtung" ist bezogen auf eine sitzende Person zu verstehen, welchem in dem mit dem Gurtgestell gebildeten Fahrzeugsitz oder der mit dem Gurtgestell gebildeten Fahrzeugsitzbank Platz genommen hat. Hierbei ist eine Sitzrichtung in der Sofakonfiguration von einer Sitzrichtung in der Fahrzeugsitzkonfiguration zu unterscheiden. Beispielsweise ist die Sitzrichtung in der Sofakonfiguration quer, z.B. senkrecht, zur Sitzrichtung in der Fahrzeugsitzkonfiguration ausgerichtet. Beispielsweise entspricht aufgrund der vorhanden Sicherheitsvorgaben im angeordneten Zustand des Gurtgestells an einem Fahrzeug die Sitzrichtung der Fahrzeugsitzkonfiguration einer Fahrtrichtung des Fahrzeugs bei einer Vorwärtsbewegung.

Beispielsweise weist das Gurtgestell eine Vertikalstütze und eine zur Vertikalstütze quer ausgerichtete Querstrebe auf. Denkbar ist, dass im montierten Zustand des Gurtgestells im Fahrzeug die Vertikalstütze in Längsrichtung der Vertikalstütze vertikal ausgerichtet ist.

Beispielsweise weist das Gurtgestell genau eine Vertikalstütze auf. Vorstellbar ist auch, dass das Gurtgestell zwei oder mehr Vertikalstützen aufweist. Denkbar ist auch, dass das Gurtgestell genau zwei, genau drei oder genau vier Vertikalstützen aufweist. Weist das Gurtgestell zwei oder mehr Vertikalstützen auf, sind die Vertikalstützen beispielsweise voneinander beabstandet vorhanden. Zum Beispiel sind die Vertikalstützen quer zu einer Sitzrichtung des mit dem Gurtgestell realisierbaren Fahrzeugsitz oder Fahrzeugsitzbank voneinander beabstandet vorhanden. Zum Beispiel sind die Vertikalstützen in Längserstreckung der Querstrebe voneinander beabstandet vorhanden.

Die Querstrebe ist bezogen auf den Nutz- bzw. Einbauzustand im Fahrzeug vorzugsweise horizontal ausgerichtet. Eine Höhe des Gurtgestells, z.B. entsprechend der Höhe der Vertikalstütze, ist senkrecht bezogen auf den Einbauzustand des Gurtgestells zu sehen. Die senkrechte Erstreckung fällt beispielsweise mit der Längsachse der Vertikalstütze oder der mehreren Vertikalstützen zusammen. Dies bedeutet, dass bei am horizontal ausgerichteten Fahrzeugboden eingebautem Gurtgestell die Vertikalstütze z.B. senkrecht steht. Denkbar ist jedoch auch, dass die Vertikalstütze, beispielsweise in eine Richtung quer zur Sitzrichtung, um die Vertikale verkippt vorhanden ist. Die Querstrebe ist dabei beispielsweise mit ihrer Längsachse horizontal ausgerichtet. Die Sitzrichtung in der Fahrzeugsitzkonfiguration ist beispielsweise senkrecht zur Vertikalstütze bzw. senkrecht zur Längsachse der Vertikalstütze und senkrecht zur Querstrebe bzw. senkrecht zur Längsachse der Querstrebe ausgerichtet vorhanden. Beispielsweise ist die Längsachse der Querstrebe quer, z.B. senkrecht, zur Längsachse der Vertikalstütze ausgerichtet.

Zum Beispiel findet die erste und die zweite lineare Bewegung, sowie die Drehbewegung des zweiten Sitzelements in einer Bewegungsebene statt. Beispielsweise ist die Bewegungsebene des zweite Sitzelements horizontal ausgerichtet.

Beispielsweise findet die erste und die zweite lineare Bewegung des zweiten Sitzelements in der gleichen Bewegungsebene statt. Denkbar ist, dass die erste und die zweite lineare Bewegung des zweiten Sitzelements und die Drehbewegung des zweiten Sitzelements in der gleichen Bewegungsebene stattfindet.

Zum Beispiel ist der Bewegungsmechanismus derart ausgebildet, dass das zweite Sitzelement ausschließlich durch eine lineare Bewegung weg vom ersten Sitzelement, einer anschließenden Drehbewegung relativ zum ersten Sitzelement und einer daran anschließenden linearen Bewegung hin zum ersten Sitzelement von der ersten Position in die zweite Position oder umgekehrt bewegbar ist.

Auch wird vorgeschlagen, dass das erste Sitzelement positionsfest relativ zur Vertikalstütze und/oder zur Querstrebe vorhanden ist. Hierdurch ist das Gurtgestell vergleichsweise vereinfacht ausgebildet.

Beispielsweise ist bei einer Bewegung des zweiten Sitzelements von der ersten Position in die zweite Position oder umgekehrt, das erste Sitzelement positionsfest am Gurtgestell festgelegt. Zum Beispiel ist das erste Sitzelement positionsfest am Gurtgestell angeordnet. Beispielsweise ist das erste Sitzelement an der Vertikalstütze und/oder an der Querstrebe angeordnet. Zum Beispiel ist das erste Sitzelement unmittelbar mit der Vertikalstütze und/oder unmittelbar mit der Querstrebe verbunden.

Beispielsweise weist das erste Sitzelement eine Strebe auf. Denkbar ist, dass die Strebe quer zur Vertikalstütze und/oder der Querstrebe ausgerichtet ist. Denkbar ist, dass die Strebe unmittelbar mit der Vertikalstütze und/oder der Querstrebe verbunden ist, z.B. verschweißt oder verschraubt ist. Beispielsweise ist die Strebe als ein Rohr, z.B. als ein Vierkantrohr ausgebildet. Vorstellbar ist auch, dass das erste Sitzelement rahmenartig oder plattenförmig ausgebildet ist. Zum Beispiel ist das erste Sitzelement im angeordneten Zustand des Gurtgestells am Fahrzeug horizontal ausgerichtet vorhanden. Denkbar ist, dass das erste Sitzelement sich im angeordneten Zustand des Gurtgestells am Fahrzeug in einer Ebene erstreckt, wobei sich die Ebene in einer ersten Richtung in die Fahrtrichtung des Fahrzeugs erstreckt und die Ebene sich in eine zweite Richtung entlang der Längserstreckung der Querstrebe, z.B. entlang der Längsachse der Querstrebe, erstreckt.

Weiter wird vorgeschlagen, dass der Bewegungsmechanismus eine lineare Führungseinheit und einen Drehmechanismus aufweist, wobei die lineare Führungseinheit ein erstes Führungselement und ein zweites Führungselement aufweist, wobei das erste zum zweiten Führungselement verschieblich gelagert ist, wobei das erste Führungselement am Drehmechanismus festgelegt ist. Hierdurch ist ein vergleichsweise kostengünstiger Bewegungsmechanismus realisierbar.

Vorstellbar ist, dass die Führungseinheit des Bewegungsmechanismus eine Führungsschiene aufweist, wobei die Führungsschiene das erste und das zweite Führungselement aufweist. Zum Beispiel sind das erste und das zweite Führungselement mittels eines Lagers zueinander beweglich gelagert. Beispielsweise ist das erste und/oder das zweite Führungselement als eine Gleitschiene oder als eine Laufschiene ausgebildet. Weiter wird vorgeschlagen, dass die Führungseinheit zwei Führungsschienen aufweist, welche parallel zueinander ausgerichtet vorhanden sind. Vorstellbar ist auch, dass die Führungsschiene ein drittes Führungselement aufweist. Beispielsweise ist hierdurch die Führungsschiene als ein Teleskopauszug ausgebildet.

Beispielsweise sind das erste Sitzelement und das zweite Sitzelement mittels des Bewegungsmechanismus miteinander verbunden und/oder zueinander festgelegt. Beispielsweise umfasst der Bewegungsmechanismus ausschließlich die lineare Führungseinheit und den Drehmechanismus zum Bewegen des zweiten Sitzelements.

Beispielsweise weist der Bewegungsmechanismus eine Auszugsbegrenzung auf, sodass ein Bewegungsbereich der linearen Führungseinheit definiert ist. Zum Beispiel ist mittels der Auszugsbegrenzung eine maximale und/oder minimale Relativbewegung des zweiten Führungselements zum ersten Führungselements vorgebbar oder vorgegeben. Beispielsweise weist die Auszugsbegrenzung ein Anschlagelement und ein Anschlagorgan auf. Das Anschlagelement ist beispielsweise in Form einer Kulissenführung ausgebildet, in welcher das Anschlagorgan eingreift. Das Anschlagelement ist beispielsweise als ein Schlitz vorhanden. Das Anschlagorgan ist beispielsweise bolzenförmig ausgebildet. Denkbar ist, dass das Anschlagorgan am Anschlagelement beweglich gelagert ist. Beispielsweise ist das Anschlagorgan in Form eines Stifts oder Bolzens im Schlitz beweglich geführt.

Beispielsweise weist das Anschlagelemente zwei Anschlagflächen auf, an welcher das Anschlagorgan in einem Zustand des zweiten Sitzelements ansteht. Beispielsweise steht das Anschlagorgan in der ersten und/oder in der zweiten Position des zweiten Sitzelements an einer ersten der beiden Anschlagflächen an. Zum Beispiel steht das Anschlagorgan in der ersten und/oder zweiten Zwischenposition des zweiten Sitzelements an einer zweiten der beiden Anschlagflächen an.

Zum Beispiel ist das Anschlagelement am ersten oder am zweiten Führungselement ausgebildet und das Anschlagorgan entsprechend gegensätzlich am zweiten oder ersten Führungselement. Vorstellbar ist aber auch, dass das Anschlagelement am ersten und/oder am zweiten Sitzelement und/oder am Drehmechanismus ausgebildet ist.

Ebenfalls wird vorgeschlagen, dass der Drehmechanismus ein erstes und ein zweites Drehelement aufweist, wobei das zweite Drehelement um eine Drehachse des Drehmechanismus relativ zum ersten Drehelement drehbar vorhanden ist, wobei das erste Drehelement positionsfest mit dem ersten Sitzelement verbunden ist, wobei das zweite Drehelement positionsfest mit dem ersten Führungselement verbunden ist. Hierdurch ist der Drehmechanismus vergleichsweise einfach ausbildbar. Auch ist hierdurch vergleichsweise einfach ein Dreh-Schiebemechanismus ausbildbar.

Denkbar ist, dass das erste Drehelement mittels einer Drehwelle des Drehmechanismus mit dem zweiten Drehelement verbunden ist. Beispielsweise weist die Drehwelle die Drehachse auf.

Außerdem wird vorgeschlagen, dass das zweite Sitzelement relativ zum ersten Sitzelement um eine Drehachse der Sitzeinheit drehbar vorhanden ist. Beispielsweise ist die Drehachse vertikal ausgerichtet vorhanden ist. Beispielsweise entspricht die Drehachse der Sitzeinheit der Drehachse des Drehmechanismus. Denkbar ist, dass die Drehachse des Drehmechanismus die Drehachse der Sitzeinheit bildet.

Zum Beispiel ist die Drehachse der Sitzeinheit relativ zur Vertikalstütze und/oder der Querstrebe positionsfest vorhanden. Beispielsweise erstreckt sich die Drehachse der Sitzeinheit parallel zu der Längsachse der Vertikalstütze und/oder zu einer Längserstreckung der Vertikalstütze. Zum Beispiel sind die Drehachse der Sitzeinheit und die Vertikalstütze in Sitzrichtung des mit dem Gurtgestell bildbaren Fahrzeugsitz voneinander beabstandet vorhanden, z.B. im angeordneten Zustand in Fahrtrichtung des Fahrzeugs.

Weiter wird vorgeschlagen, dass der Bewegungsmechanismus eine Rasteinheit aufweist, wobei die Rasteinheit einen ersten Rastmechanismus aufweist, um den Drehmechanismus in der ersten und/oder in der zweiten Position festzulegen. Hierdurch ist das Gurtgestell ausgebildet, die Sicherheitsnormen zu erfüllen.

Beispielsweise weist die Rasteinheit einen zweiten Rastmechanismus auf, um das erste Sitzelement relativ zum zweiten Sitzelement in einer Position festzulegen. Beispielsweise weist die Rasteinheit einen zweiten Rastmechanismus auf, um das zweite Sitzelement relativ zum ersten Sitzelement in der ersten und/oder der zweiten Zwischenposition festzulegen. Beispielsweise ist der zweite Rastmechanismus dazu ausgebildet eine lineare Bewegung des zweiten Sitzelements zum ersten Sitzelement zu blockieren.

Zum Beispiel ist der erste Rastmechanismus als eine Drehverriegelung ausgebildet. Denkbar ist, dass der zweite Rastmechanismus ausgebildet ist, das zweite Sitzelement relativ zum ersten Sitzelement zu verriegeln. Beispielsweise weist der zweite Rastmechanismus einen Rasthebel auf, mittels welchem die Verriegelung des zweiten Rastmechanismus lösbar oder verriegelbar ist. Hierdurch ist der zweite Rastmechanismus für einen Nutzer des Gurtgestells vergleichsweise einfach bedienbar.

Ebenfalls wird vorgeschlagen, dass die Rasteinheit derart ausgebildet ist, dass durch eine lineare Bewegung des zweiten Sitzelements relativ zum ersten Sitzelement der erste Rastmechanismus gelöst oder verriegelt ist, hierdurch kann durch die erste lineare Bewegung des zweiten Sitzelements weg vom ersten Sitzelement die Verriegelung des ersten Rastmechanismus gelöst werden, sodass an die erste lineare Bewegung anschließend die Drehbewegung des zweiten Sitzelements realisierbar ist.

Beispielsweise ist die lineare Führungseinheit mit der Rasteinheit gekoppelt oder verbunden. Beispielsweise ist das zweite Sitzelement mit dem ersten Rastmechanismus verbunden, sodass eine Verriegelung des ersten Rastmechanismus durch eine Relativbewegung des zweiten Sitzelements zum ersten Sitzelement lösbar oder verriegelbar ist.

Beispielsweise weist das Gurtgestell einen Stützabschnitt in Form eines Stützfuß auf. Denkbar ist, dass der Stützfuß mit einem ersten Ende an der Vertikalstütze angebunden ist und mit einem zweiten Ende, z.B. einem unteren Stützabschnitt-Ende, im Bereich des Fahrzeugbodens des Fahrzeugs mit dem Fahrzeug verbindbar ausgebildet ist. Zum Beispiel ist der Stützfuß im angeordneten Zustand am Fahrzeug in Fahrtrichtung schräg nach unten abstehend mit dem ersten Ende an der Vertikalstütze angeordnet.

Ebenfalls wird vorgeschlagen, dass an der Querstrebe Anbindungselemente zur Anbindung einer Isofix-Halteraste eines Isofix-Kindersitzes vorhanden sind. Hierdurch kann ein Isofix-Kindersitz am Gurtgestell neben dem Fahrzeugsitz entsprechend der Sicherheitsnormen befestigt werden. Beispielsweise ist das Anbindungselement als eine Bohrung vorhanden. Eine Isofix-Halteraste ist beispielsweise in Form eines U-Bügels an der Querstrebe befestigt.

Vorstellbar ist auch, dass an der Vertikalstütze ein Halteelement für einen Top-Tether des Kindersitzes vorhanden ist, sodass der Top-Tether am Halteelement befestigbar ist. Beispielsweise ist das Halteelement als eine Öffnung oder als eine Öse ausgebildet, in welche ein Haken des Top Tether einhängbar ist. Beispielsweise weist die Querstrebe das Halteelement zur Befestigung des Top-Tether auf.

Beispielsweise weist das Gurtgestell eine Quertraverse auf, wobei die Quertraverse an einem oberen Ende der Vertikalstütze an der Vertikalstütze angeordnet ist. Denkbar ist, dass an der Quertraverse ein Element eines Gurtrückhaltesystems angeordnet ist. Beispielsweise ist ein Gurtstraffer oder ein Gurtumlenker an der Quertraverse angeordnet. Vorstellbar ist auch, dass zwei Elemente des Gurtrückhaltesystems an der Quertraverse angeordnet sind. Zum Beispiel ist das obere Ende der Vertikalstütze entlang der Längsachse der Vertikalstütze vom unteren Ende der Vertikalstütze beabstandet vorhanden. Beispielsweise ist an der Querstrebe ein Element des Gurtrückhaltesystems angeordnet. Z.B. ist an der Querstrebe ein Gurtschloss des Gurtrückhaltesystems angeordnet. Denkbar ist auch, dass das Gurtschloss des Gurtrückhaltesystems des Gurtgestells am Fahrzeugrahmen oder der Vertikalstütze angeordnet ist.

Elemente des Gurtrückhaltesystems sind beispielsweise ein Gurt, ein Gurtstraffer, ein Gurtschloss und/oder ein Gurtumlenker. Beispielsweise ist das Gurtrückhaltesystem als ein Dreipunkt-Gurtrückhaltesystem, z.B. als ein sogenannter Dreipunktgurt, ausgebildet.

Beispielsweise weist das Gurtgestell einen Vertikalstrebe auf. Denkbar ist, dass die Querstrebe mittels der Vertikalstrebe mit dem Fahrzeug im Bereich des Fahrzeugbodens verbindbar ist.

Hierdurch ist eine zusätzliche Abstützung der Querstrebe realisierbar. Beispielsweise erstreckt sich die Vertikalstrebe ausschließlich zwischen dem Bereich des Fahrzeugbodens und der Querstrebe in vertikaler Richtung. Beispielsweise ist die Querstrebe mit dem Fahrzeugrahmen und/oder der Fahrzeugsäule des Fahrzeugs verbindbar ausgebildet.

Beispielsweise ist an der Vertikalstütze ein Rahmen angeordnet, wobei die Querstrebe einen Teil des Rahmens bilden kann. Vorstellbar ist, das am Rahmen ein Teilrahmenelement beweglich angeordnet ist, sodass der Rahmen in Richtung der Längsachse der Querstrebe vergrößerbar ist, um einen Rückenlehnenbereich eines zweiten Fahrzeugsitz im angeordneten Zustand zu bilden. Zum Beispiel weist der Rahmen ein oberes Querelement auf, an welchem eine Kopfstütze anordenbar ist.

Auch wird vorgeschlagen, dass das Gurtgestell ein Stützelement aufweist, um das erste Sitzelement nach unten am Fahrzeug abzustützen. Denkbar ist, dass das Stützelement mit der Vertikalstütze, der Vertikalstrebe und/oder der Querstrebe verbunden ist. Beispielsweise ist das Stützelement unmittelbar mit der Vertikalstütze, der Vertikalstrebe und/oder der Querstrebe verbunden. Denkbar ist, dass das Stützelement dazu ausgebildet ist, mit dem Fahrzeugrahmen und/oder der Fahrzeugsäule des Fahrzeugs im angeordneten Zustand am Fahrzeug verbunden zu werden.

Beispielsweise ist das Stützelement L-förmig ausgebildet, wobei ein erster Schenkel des Stützelements sich in horizontaler Richtung erstreckt und ein zweiter Schenkel des Stützelements in vertikaler Richtung. Denkbar ist, dass ein Ende des zweiten Schenkels im angeordneten Zustand des Gurtgestells am Fahrzeug mit dem Fahrzeugrahmen verbindbar ist. Vorstellbar ist, dass ein Ende des ersten Schenkels im angeordneten Zustand des Gurtgestells am Fahrzeug mit der Fahrzeugsäule verbindbar ist. Beispielsweise ist der Stützfuß mit dem Stützelement verbunden, z.B. unmittelbar.

Eine beispielhafte Ausbildungsform der Erfindung ist ein Fahrzeugsitz mit einem Gurtgestell nach einer der vorangegangen genannten Varianten, wobei der Fahrzeugsitz ein erstes und ein zweites Sitzkissen aufweist, wobei das erste Sitzkissen am ersten Sitzelement angeordnet ist und das zweite Sitzkissen am zweiten Sitzelement, wobei bei einer Bewegung des zweiten Sitzelements relativ zum ersten Sitzelement das zweite Sitzkissen relativ zum ersten Sitzkissen bewegt wird. Hierdurch ist ein Fahrzeugsitz realisierbar, welcher durch Bewegen des zweiten Sitzkissens relativ zum ersten Sitzkissen von einer Sofakonfiguration in eine Fahrzeugsitzkonfiguration umbaubar ist.

Beispielsweise sind das erste und das zweite Sitzkissen dazu ausgebildet, dass auf dem Sitzkissen im angeordneten Zustand des Fahrzeugsitz mit dem Gurtgestell im Fahrzeug eine Person auf dem Sitzkissen sitzen kann.

Beispielsweise ist das erste Sitzkissen positionsfest mit dem ersten Sitzelement verbunden. Denkbar ist, dass das zweite Sitzkissen positionsfest mit dem zweiten Sitzelement verbunden ist. Vorstellbar ist auch, dass das erste Sitzkissen lösbar am ersten Sitzelement festgelegt ist und/oder das zweite Sitzkissen lösbar am zweiten Sitzelement festgelegt ist. Beispielsweise ist das erste Sitzkissen positionsfest, z.B. unbeweglich, am Fahrzeugsitz vorhanden. Beispielsweise ist das erste und/oder zweite Sitzelement mittels einer Klettverbindung mit dem ersten und/oder zweiten Sitzelement lösbar verbunden. Dadurch, dass die Sitzkissen lösbar an den Sitzelementen angeordnet sein können, ist ein vergleichsweise einfacher Zugang von obenan einen Raum unterhalb der Sitzelemente, z.B. an einen Raum unterhalb des ersten Sitzelements ermöglicht.

Beispielsweise ist in der ersten Position des zweiten Sitzelements der Fahrzeugsitz in der Sofakonfiguration vorhanden und in der zweiten Position des zweiten Sitzelements in der Fahrzeugsitzkonfiguration oder umgekehrt.

Außerdem wird vorgeschlagen, dass in der zweiten Position des zweiten Sitzelements der Fahrzeugsitz ein Fahrzeugsitz für zwei Personen bildet.

Beispielsweise ist der Fahrzeugsitz oder die Fahrzeugsitzbank als ein Wohnmobilfahrzeugsitz, ein Reisemobilfahrzeugsitz, ein Wohnwagenfahrzeugsitz und/oder ein Caravanfahrzeugsitz ausgebildet.

Als weitere denkbare Ausführungsvariante wird ein Fahrzeug, insbesondere Wohnmobil, mit einem Gurtgestell nach einer der vorangegangen genannten Ausführungsvarianten oder mit einem Fahrzeugsitz oder einer Fahrzeugsitzbank nach der vorangegangen genannten Ausführungsformen vorgeschlagen.

### Figurenbeschreibung

Weitere Merkmale und Vorteile der Erfindung sind anhand eines schematisch gezeigten Ausführungsbeispiels näher erläutert.

Im Einzelnen zeigt:
- Figur 1: ein Gurtgestell in einer perspektivischen Darstellung von schrägt seitlich vorne oben in einer ersten Position,
- Figur 2: das Gurtgestell gemäß Figur 1 in einer ersten Zwischenposition,
- Figur 3: das Gurtgestell gemäß Figur 1 in einer zweiten Zwischenposition,
- Figur 4: das Gurtgestell gemäß Figur 1 in einer zweiten Position,
- Figur 5: eine Ansicht auf einen Bewegungsmechanismus eines Gurtgestells von schräg seitlich vorne oben in einer Position und
- Figur 6: der Bewegungsmechanismus gemäß Figur 5 in einer weiteren Position.

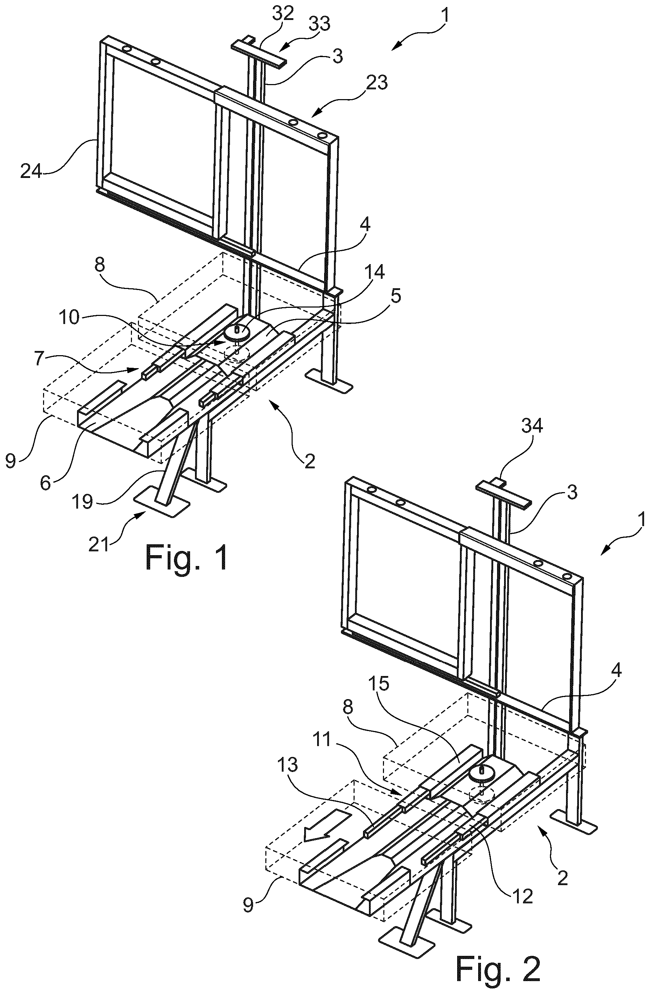

In Figur 1 ist ein Gurtgestell 1 gezeigt. Das Gurtgestell 1 weist eine Sitzeinheit 2, eine Vertikalstütze 3 und eine Querstrebe 4 auf. Beispielsweise weist die Sitzeinheit 2 ein erstes Sitzelement 5, ein zweites Sitzelement 6 und einen Bewegungsmechanismus 7 auf.

In den Figuren 1 bis 4 ist in gestrichelter Darstellung ein erstes Sitzkissen 8 und ein zweites Sitzkissen 9 eines Fahrzeugsitzes (nicht dargestellt) transparent dargestellt.

Der Bewegungsmechanismus 7 weist einen Drehmechanismus 10 und eine lineare Führungseinheit 11 auf. Die lineare Führungseinheit 11 weist ein erstes Führungselement 12 und ein zweites Führungselement 13 auf. Der Drehmechanismus 10 weist ein erstes Drehelement 14 und ein zweites Drehelement 15 auf. Das zweite Drehelement 15 ist um eine Drehachse D um das erste Drehelement 14 drehbar gelagert.

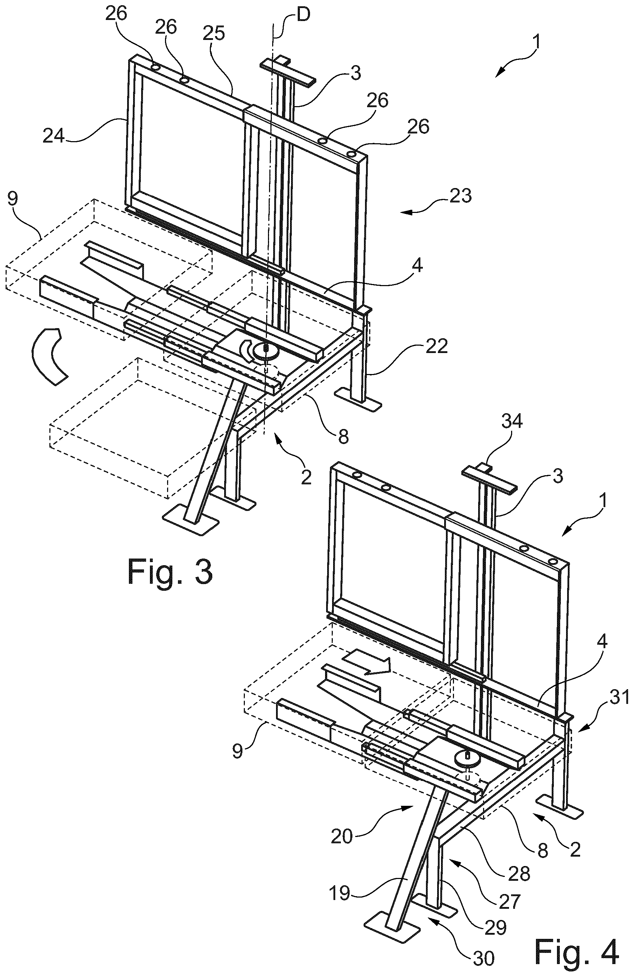

In den Figuren 1 bis 4 ist ein Bewegungsablauf des Gurtgestell 1 von einer Sofakonfiguration (gemäß Figur 1) in eine Fahrzeugsitzkonfiguration (gemäß Figur 4) dargestellt.

Figur 1 zeigt das Gurtgestell 1 in einer Sofakonfiguration. In dieser Konfiguration befindet sich das zweite Sitzelement 6 in der ersten Position. Das zweite Sitzelement 6 wird durch eine lineare Bewegung weg vom ersten Sitzelement 5 in eine erste Zwischenposition gemäß Figur 2 bewegt. Beispielsweise ist diese lineare Bewegung des zweiten Sitzelements 6 aus der ersten Position in die erste Zwischenposition im eingebauten Zustand in einem Fahrzeug eine Bewegung in Fahrtrichtung des Fahrzeugs. Eine Bewegungsrichtung des zweiten Sitzelements 6 relativ zum ersten Sitzelement 5 ist in den Figuren 2 bis 4 jeweils durch einen Pfeil angedeutet.

In der ersten Zwischenposition gemäß Figur 2 ist beispielsweise eine Verriegelung oder eine Verrastung des Drehmechanismus 10 gelöst, sodass das zweite Sitzelement 6 um die Drehachse D des Drehmechanismus 10 in die zweite Zwischenposition gemäß Figur 3 bewegbar oder drehbar ist. Hierbei wird vorgeschlagen, dass das zweite Sitzelement 6 in der ersten Zwischenposition einen Minimalabstand zum ersten Sitzelement 5 aufweist, sodass bei der Drehbewegung aus der ersten Zwischenposition in die zweite Zwischenposition das zweite Sitzelement 6 und/oder das zweite Sitzkissen 9 am ersten Sitzelement 5 und/oder am ersten Sitzkissen 8 vorbeischwenkbar ist, ohne dass eine Berührung der Sitzkissen 8, 9 stattfindet.

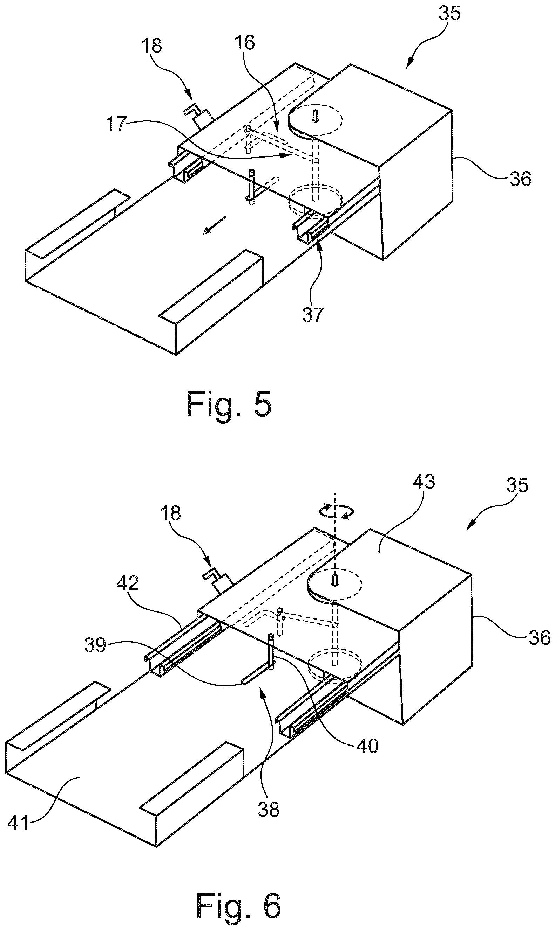

Abschließend wird das zweite Sitzelement 6 anschließend an die Drehbewegung aus der zweiten Zwischenposition gemäß Figur 3 durch eine lineare Bewegung hin zum ersten Sitzelement 5 in die zweite Position gemäß Figur 4 bewegt. In der ersten und/oder der zweiten Position ist beispielsweise eine lineare Bewegung des zweiten Sitzelements 6 relativ zum ersten Sitzelement 5 durch eine Rastmechanismus analog des in den Figuren 5 und 6 dargestellten Rastmechanismus 18 blockierbar. Auch wird vorgeschlagen, dass sowohl in der ersten, als auch in der zweiten Position eine Drehung des zweiten Sitzelements 6 um die Drehachse D des Drehmechanismus 10 blockiert ist.

In der zweiten Position gemäß Figur 4 befindet sich das Gurtgestell 1 in der Fahrzeugsitzkonfiguration. Beispielsweise bietet das Gurtgestell 1 in der Fahrzeugsitzkonfiguration gemäß Figur 4 zwei Fahrgästen einen Fahrzeugsitzplatz mittels welchem die Fahrgäste während der Fahrt des Fahrzeugs, in welchem das Gurtgestell 1 anbringbar ist, entsprechend der Sicherheitsvorschriften sicherbar sind.

Beispielsweise sind das erste Sitzelement 5 und das erste Drehelement 14 r positionsfest aneinander angeordnet. Beispielsweise bildet das erste Sitzelement 5 das erste Drehelement 14 oder das erste Sitzelement 5 weist das erste Drehelement 14 auf. Zum Beispiel ist das erste Sitzelement 5 mit dem ersten Drehelement 14 verschraubt oder vernietet.

Zum Beispiel ist das zweite Sitzelement 6 mit dem zweiten Drehelement 15 verbunden. Beispielsweise sind das zweite Sitzelement 6 und das zweite Drehelement 15 mittels der Führungseinheit 11 miteinander gekoppelt. Denkbar ist, dass das zweite Sitzelement 6 positionsfest am zweiten Führungselement 13 angeordnet ist. Vorstellbar ist auch, dass das zweite Drehelement 15 positionsfest mit dem ersten Führungselement 12 verbunden ist. Denkbar ist auch, dass das erste Führungselement 12 das zweite Drehelement 15 aufweist oder bildet.

Beispielsweise sind das erste Drehelement 14 und das zweite Drehelement 15 über die Drehachse D relativ zueinander drehbar gelagert.

Beispielsweise weist das Gurtgestell 1 einen Stützabschnitt in Form eines Stützfuß 19 auf. Denkbar ist, dass der Stützfuß mit einem ersten Ende 20 an der Vertikalstütze 3 angebunden ist und mit einem zweiten Ende 21 im Bereich des Fahrzeugbodens des Fahrzeugs mit dem Fahrzeug verbindbar ausgebildet ist.

Beispielsweise weist das Gurtgestell 1 einen Vertikalstrebe 22 auf. Denkbar ist, dass die Querstrebe 4 mittels der Vertikalstrebe 22 mit dem Fahrzeug im Bereich des Fahrzeugbodens verbindbar ist. Hierdurch ist eine zusätzliche Abstützung der Querstrebe 4 realisierbar. Beispielsweise erstreckt sich die Vertikalstrebe 22 ausschließlich zwischen dem Bereich des Fahrzeugbodens und der Querstrebe 4 in vertikaler Richtung.

Beispielsweise ist an der Vertikalstütze 3 ein Rahmen 23 angeordnet, wobei die Querstrebe 4 einen Teil des Rahmens 23 bilden kann. Vorstellbar ist, das am Rahmen 23 ein Teilrahmenelement 24 beweglich angeordnet ist, sodass der Rahmen 23 in Richtung der Längsachse der Querstrebe 4 vergrößerbar ist, um einen Rückenlehnenbereich eines zweiten Fahrzeugsitz im angeordneten Zustand zu bilden. Zum Beispiel weist der Rahmen ein oberes Querelement 25 auf, an welchem eine Kopfstütze (nicht dargestellt) anordenbar ist. Beispielsweise weist das Querelement 25 Bohrungen 26 auf, an welchen eine Kopfstütze angeordnet werden kann.

Auch wird vorgeschlagen, dass das Gurtgestell 1 ein Stützelement 27 aufweist, um das erste Sitzelement 5 nach unten am Fahrzeug abzustützen. Denkbar ist, dass das Stützelement 27 mit der Vertikalstütze 3, der Vertikalstrebe 22 und/oder der Querstrebe 4 verbunden ist. Beispielsweise ist das Stützelement 27 L-förmig ausgebildet, wobei ein erster Schenkel 28 des Stützelements sich in horizontaler Richtung erstreckt und ein zweiter Schenkel 29 des Stützelements in vertikaler Richtung. Denkbar ist, dass ein Ende 30 des zweiten Schenkels 29 im angeordneten Zustand des Gurtgestells 1 am Fahrzeug mit dem Fahrzeugrahmen verbindbar ist. Vorstellbar ist, dass ein Ende 31 des ersten Schenkels 28 im angeordneten Zustand des Gurtgestells 1 am Fahrzeug mit der Fahrzeugsäule verbindbar ist.

Beispielsweise weist das Gurtgestell 1 eine Quertraverse 32 auf, wobei die Quertraverse 32 an einem oberen Ende 33 der Vertikalstütze 3 an der Vertikalstütze 3 angeordnet ist. Denkbar ist, dass an der Quertraverse 32 ein Element 34 eines Gurtrückhaltesystems angeordnet ist.

Auch kann ein Gurtgestell 35 eine Rasteinheit 16 aufweisen (siehe Figuren 5 und 6). Die Rasteinheit 16 weist einen ersten Rastmechanismus 17 und eine zweiten Rastmechanismus 18 auf. Der Bewegungsmechanismus mit der Rasteinheit 16 des Gurtgestells 35 kann analog oder gleich zum Bewegungsmechanismus 7 mit der Rasteinheit 16 des Gurtgestells 1 ausgebildet sein.

In den Figuren 5 und 6 ist ein Stützelement 36 dargestellt, welches kastenartig in einer U-förmigen Form ausgebildet ist. Das Stützelement des Gurtgestells kann insbesondere im Hinblick auf die räumlichen Anforderungen im Fahrzeug angepasst ausgebildet sein.

Der Rastmechanismus 18 ist beispielsweise als ein Rastbeschlag ausgebildet. Hierdurch kann eine Bewegung der Führungseinheit 37 blockiert werden. Beispielsweise ist in der ersten oder in der zweiten Position (gemäß Figur 5) eine Bewegung der Führungseinheit 37 durch den Rastbeschlag verriegelt sein.

Auch kann die Führungseinheit 37, das erste oder das zweite Sitzelement eine Auszugsbegrenzung 38 aufweisen, sodass ein Bewegungsbereich der linearen Führungseinheit definiert ist. Zum Beispiel ist mittels der Auszugsbegrenzung 38 eine maximale und/oder minimale Relativbewegung des zweiten Führungselements zum ersten Führungselements vorgebbar oder vorgegeben. Beispielsweise weist die Auszugsbegrenzung 38 ein Anschlagelement 39 und ein Anschlagorgan 40 auf. Das Anschlagelement 39 ist beispielsweise in Form einer Kulissenführung ausgebildet, in welcher das Anschlagorgan 40 eingreift. Beispielsweise ist das Anschlagorgan 40 in Form eines Stifts oder Bolzens im Schlitz beweglich geführt.

Beispielsweise ist der erste Rastmechanismus 17 mit dem zweiten Sitzelement 41 oder dem zweiten Führungselement 42 gekoppelt, sodass eine lineare Bewegung des zweiten Sitzelements 41 aus der ersten Position in die erste Zwischenposition (gemäß Figur 6) eine Drehbewegung des ersten Rastmechanismus 17 verursacht, wodurch eine Drehbewegung des zweiten Sitzelements 41 relativ zum Stützelement 36 oder relativ zum ersten Sitzelement 43 freigegeben ist.

**Bezugszeichenliste**

| | | | |
|---|---|---|---|
| 1 | Gurtgestell | 36 | Stützelement |
| 2 | Sitzeinheit | 37 | Führungseinheit |
| 3 | Vertikalstütze | 38 | Auszugsbegrenzung |
| 4 | Querstrebe | 39 | Anschlagelement |
| 5 | Sitzelement | 40 | Anschlagorgan |
| 6 | Sitzelement | 41 | Sitzelement |
| 7 | Bewegungsmechanismus | 42 | Führungselement |
| 8 | Sitzkissen | 43 | Sitzelement |
| 9 | Sitzkissen | | |
| 10 | Drehmechanismus | | |
| 11 | Führungseinheit | | |
| 12 | Führungselement | | |
| 13 | Führungselement | | |
| 14 | Drehelement | | |
| 15 | Drehelement | | |
| 16 | Rasteinheit | | |
| 17 | Rastmechanismus | | |
| 18 | Rastmechanismus | | |
| 19 | Stützfuß | | |
| 20 | Ende | | |
| 21 | Ende | | |
| 22 | Vertikalstrebe | | |
| 23 | Rahmen | | |
| 24 | Teilrahmenelement | | |
| 25 | Querelement | | |
| 26 | Bohrung | | |
| 27 | Stützelement | | |
| 28 | Schenkel | | |
| 29 | Schenkel | | |
| 30 | Ende | | |
| 31 | Ende | | |
| 32 | Quertraverse | | |
| 33 | Ende | | |
| 34 | Element | | |
| 35 | Gurtgestell | | |

## Patentansprüche

1. Gurtgestell (1) für einen Fahrzeugsitz eines Fahrzeugs, wobei das Gurtgestell (1) eine Sitzeinheit (2), eine Vertikalstütze (3) und eine an der Vertikalstütze (3) angeordnete Querstrebe (4) aufweist, wobei die Sitzeinheit (2) dazu ausgebildet ist, um ein Sitzkissen (8, 9) des Fahrzeugsitz anzuordnen, wobei die Sitzeinheit (2) ein erstes Sitzelement (5) und ein zweites Sitzelement (6) aufweist, wobei die Sitzeinheit (2) einen Bewegungsmechanismus (7) aufweist, sodass das zweite Sitzelement (6) aus einer ersten Position relativ zum ersten Sitzelement (5) in eine zweite Position relativ zum ersten Sitzelement (5) bewegbar ist, wobei der Bewegungsmechanismus (7) derart ausgebildet ist, dass das zweite Sitzelement (6) durch eine erste lineare Bewegung weg vom ersten Sitzelement (5), einer anschließenden Drehbewegung relativ zum ersten Sitzelement (5) und einer daran anschließenden zweiten linearen Bewegung hin zum ersten Sitzelement (5) von der ersten in die zweite Position oder umgekehrt bewegbar ist.

2. Gurtgestell (1) nach dem vorangegangenen Anspruch 1, **dadurch gekennzeichnet, dass** das erste Sitzelement (5) positionsfest relativ zur Vertikalstütze (3) und/oder zur Querstrebe (4) vorhanden ist.

3. Gurtgestell (1) nach einem der vorangegangenen Ansprüche,
**dadurch gekennzeichnet, dass** der Bewegungsmechanismus (7) eine lineare Führungseinheit (11) und einen Drehmechanismus (10) aufweist, wobei die lineare Führungseinheit (11) ein erstes und ein zweites Führungselement (12, 13) aufweist, wobei das erste Führungselement (12) zum zweiten Führungselement (13) verschieblich gelagert ist, wobei das erste Führungselement (12) am Drehmechanismus (10) festgelegt ist.

4. Gurtgestell (1) nach dem vorangegangenen Anspruch 4, **dadurch gekennzeichnet, dass** der Drehmechanismus (10) ein erstes und ein zweites Drehelement (14, 15) aufweist, wobei das zweite Drehelement (15) um eine Drehachse des Drehmechanismus (10) relativ zum ersten Drehelement (14) drehbar vorhanden ist, wobei das erste Drehelement (14) positionsfest mit dem ersten Sitzelement (5) verbunden ist, wobei das zweite Drehelement (14) positionsfest mit dem ersten Führungselement (12) verbunden ist.

5. Gurtgestell (1) nach einem der vorangegangenen Ansprüche,
**dadurch gekennzeichnet, dass** das zweite Sitzelement (6) relativ zum ersten Sitzelement (5) um eine Drehachse der Sitzeinheit (2) drehbar vorhanden ist, wobei die Drehachse vertikal ausgerichtet vorhanden ist.

6. Gurtgestell (1) nach einem der vorangegangenen Ansprüche 3 oder 4, **dadurch gekennzeichnet, dass** der Bewegungsmechanismus (7) eine Rasteinheit (16) aufweist, wobei die Rasteinheit (16) einen ersten Rastmechanismus (17) aufweist, um den Drehmechanismus (10) mittels dem ersten Rastmechanismus (17) in der ersten und/oder in der zweiten Position festzulegen.

7. Gurtgestell (1) nach dem vorangegangenen Anspruch 6, **dadurch gekennzeichnet, dass** die Rasteinheit (16) derart ausgebildet ist, dass durch eine lineare Bewegung des zweiten Sitzelements (6) relativ zum ersten Sitzelement (5) der erste Rastmechanismus (17) gelöst oder verriegelt ist, hierdurch kann durch die erste lineare Bewegung des zweiten Sitzelements (6) weg vom ersten Sitzelement (5) die Verriegelung des ersten Rastmechanismus (17) gelöst werden, sodass an die erste lineare Bewegung anschließend die Drehbewegung des zweiten Sitzelements (6) realisierbar ist.

8. Fahrzeugsitz mit einem Gurtgestell (1) nach einem der vorangegangenen Ansprüche, **dadurch gekennzeichnet, dass** der Fahrzeugsitz ein erstes und ein zweites Sitzkissen (8, 9) aufweist, wobei das erste Sitzkissen (8) am ersten Sitzelement (5) angeordnet ist und das zweite Sitzkissen (9) am zweiten Sitzelement (6), wobei bei einer Bewegung des zweiten Sitzelements (6) relativ zum ersten Sitzelement (5) das zweite Sitzkissen (9) relativ zum ersten Sitzkissen (8) bewegt wird.

9. Fahrzeugsitz mit einem Gurtgestell (1) nach einem der vorangegangenen Ansprüche, **dadurch gekennzeichnet, dass** in der zweiten Position des zweiten Sitzelements (6) der Fahrzeugsitz ein Fahrzeugsitz für zwei Personen bildet.

10. Fahrzeug, insbesondere Wohnmobil, mit einem Gurtgestell (1) nach einem der vorangegangenen Ansprüche 1 bis 7 oder mit einem Fahrzeugsitz nach einem der vorangegangenen Ansprüche 8 bis 9.
